Europäisches Patentamt

European Patent Office

Office européen des brevets

(11) Veröffentlichungsnummer: **0 332 904**
**A2**

## (12) EUROPÄISCHE PATENTANMELDUNG

(21) Anmeldenummer: 89103338.3

(22) Anmeldetag: 25.02.89

(51) Int. Cl.⁴: **H04M 1/18 , H04M 1/02**

(30) Priorität: 14.03.88 CH 960/88

(43) Veröffentlichungstag der Anmeldung:
**20.09.89 Patentblatt 89/38**

(84) Benannte Vertragsstaaten:
**DE FR IT**

(71) Anmelder: **Peiker, Andreas**
**Terracinaweg 5 Postfach 20 55**
**D-6380 Bad Homburg v.d. Höhe(DE)**

(72) Erfinder: **Peiker, Andreas**
**Terracinaweg 5 Postfach 20 55**
**D-6380 Bad Homburg v.d. Höhe(DE)**

(74) Vertreter: **Keller, René, Dr. et al**
**Patentanwälte Dr. René Keller & Partner**
**Postfach 12**
**CH-3000 Bern 7(CH)**

(54) **Autotelefon.**

(57) Der Halterungsteil (1) für den Sprechhörer (2) ist über einen Zwischenteil (5) mit einem im Fahrzeug verankerten Bodenteil (4) verbunden und trägt eine Leiterplatte (6) mit mehreren Steckverbindern (11-14) für im Fahrzeug verlegte Kabel (22-25). Der Zwischenteil (5) trägt eine mit einem (11) der Steckverbinder (11-14) verbundene, zusätzliche elektrische Baugruppen aufweisende zweite Leiterplatte (16). Der Bodenteil (4) hat eine Aussparung (21) zur Durchführung sämtlicher Kabel (22-25) und der Zwischenteil (5) einen Durchgang (20) für die Durchführung der Kabel (22-24) zu den übrigen Steckverbindern (12-14).

Das Telefon ist einfach mit minimalem Verkabelungs- und Steckverbinderaufwand sowie geringer Bauhöhe mit mehreren Zusatzgeräten zusammenbaubar.

Die zweite Leiterplatte (16) kann einen digitalen Anrufbeantworter tragen. Dessen Sprachaufzeichnungsspeicher kann als Teil einer Einbruchsmeldeinrichtung eine mittels des Sprechhörermikrofons (2) aufzeichenbare Einbruchsmeldung speichern. Die Einbruchsmeldeeinrichtung wählt ausgelöst durch einen Einbruchsignalgeber eine vorgewählte Telefonnummer und übermittelt die Einbruchsmeldung.

Der lösbare Halterungsteil (1) und der fest im Fahrzeug verankerte Zwischenteil (5) können je einen Codeträger aufweisen, wobei das Telefon nur funktionsfähig ist, wenn die beiden Codes übereinstimmen.

Fig.1

## Autotelefon

Die Erfindungen betreffen Autotelefone gemäss den Oberbegriffen der Patentansprüche 1, 8 und 12.

Autotelefone dieser Art sind z. B. aus den EP-A 137 383 und EP-A 235 776 bekannt. Sie lassen sich in einfacher Weise im Fahrzeug montieren, können jedoch nicht bzw. nur durch einen aufwendigen Umbau mit Zusatzgeräten, z. B. einem Anrufbeantworter ausgerüstet werden.

Es sind ferner Autotelefone bekannt, deren an der Unterseite geschlossener und mit einem Steckverbinder ausgerüsteter Halterungsteil auf in Modulbautechnik aufeinander stapelbare Zusatzgeräte aufgesetzt werden kann, wobei jedes Zusatzgerät ein geschlossenes Gehäuse mit Steckverbindern an der Ober- und Unterseite aufweist. Dabei müssen sämtliche für das Autotelefon und die Zusatzgeräte bestimmten, im Fahrzeug verlegten Kabel an das jeweils unterste Zusatzgerät angeschlossen und in jedem Zusatzgerät Verbindungsleitungen und Steckverbinder auch für die nicht für dieses Gerät bestimmten Kabel vorgesehen werden, was aufwendig und die Gefahr von HF-Einstreuungen erhöht. Die mit kompletten Gehäusen ausgeführten Zusatzgeräte sind zudem verhältnismässig gross, so dass sich beim Zusammenbau der Halterung mit dem bzw. den Zusatzgeräten ein unerwünscht hoher "Turm-Aufbau" im Fahrzeug ergibt.

Die Erfindung, wie sie im Anspruch 1 angegeben ist, löst die Aufgabe, ein in einfacher Weise aus einer Halterung und einem oder mehreren Zusatzgeräten zusammenbaubares Autotelefon mit minimalem Verkabelungs- und Steckverbinderaufwand und möglichst geringer Bauhöhe zu schaffen.

Die Vorteile der Erfindung sind darin zu sehen, dass der Zwischenteil in einfacher und billiger Weise als eine Leiterplatte tragender Rahmen mit geringer Bauhöhe von z. B. nur 1 cm ausgeführt werden kann, am Zwischenteil nur für die von ihm (seiner Leiterplatte) getragenen zusätzlichen elektrischen Baugruppen ein Anschluss bzw. Anschlüsse (z. B. Steckverbinder) vorgesehen werden müssen, also keine Anschlüsse sowie Verbindungskabel für mit der Leiterplatte der Halterung bzw. anderen Zwischenteilen zu verbindende, im Fahrzeug verlegte Kabel, wobei alle im Fahrzeug für das Telefon bzw. die zusätzlichen elektrischen Baugruppen des bzw. der Zwischenteile verlegten Kabel (z. B. Kabel zum Sende-Empfangsgerät, zu einer Freihörspracheinrichtung, zur Autobatterie) unsichtbar unter der Bodenplatte weggeführt werden können.

Die geringe Bauhöhe des Zwischenteils ermöglicht es auch, unauffällig eine Einbruchmeldeeinrichtung gemäss dem Anspruch 8 vorzusehen, welche eine beim Verlassen des Fahrzeugs z. B.

mittels der Wähltastatur in den Telefonnummernspeicher eingegebene Telefonnummer bei einem Einbruchsignal des Einbruchsignalgebers selbsttätig anruft und die im Sprachaufzeichnungsspeicher gespeicherte, fest vorgegebene oder mittels des Mikrofons des Sprechhörers aufgezeichnete Einbruchsmeldung durchgibt.

Der Fahrzeuglenker kann beim Verlassen des Fahrzeugs z. B. die Telefonnummer seines Hauses, des Hotels, in dem er logiert, oder der Polizei in den Telefonnummernspeicher eingeben und einen entsprechenden Text (bei Eingabe der Telefonnummer des Hotels, der Polzei z. B. mit Angabe des Standorts des Fahrzeugs) im Sprachaufzeichnungsspeicher speichern. Der Einbruchsignalgeber kann in bei üblichen Auto-Alarmeinrichtungen bekannter Weise auf einen Spannungsabfall (wenn ein Verbraucher, z. B. die Innenbeleuchtung eingeschaltet wird), das Oeffnen der Motorhaube oder der Türen usw. ansprechen oder nach Art des bekannten Utraschall-Innenraumschutzes durch eine Ultraschall-Sonde ausgelöst werden.

Der Vorteil der im Anspruch 8 angegebenen Erfindung ist darin zu sehen, dass eine "stille" Alarmierung ermöglicht wird. Die Erfindung geht dabei von der Erkenntnis aus, dass bei in Fahrzeugen montierten Einbruchmeldern bzw. -signalgebern Fehlalarme unvermeidlich sind. Solche Fehlalarme sind bei den bekannten Auto-Alarmeinrichtungen, die eine Sirene oder die Autohupe einschalten, vor allem bei Nacht äusserst unangenehm. Nach einem Fehlalarm, durch den die ganze Nachbarschaft gestört wurde, werden die bekannten Alarmeinrichtungen deshalb von den Besitzern häufig für immer abgeschaltet.

Bei der erfindungsgemässen Lösung wird demgegenüber nur der Angerufene, wenn das Auto in der Nacht vor dem Haus des Besitzers steht nur dieser gestört. Dabei ermöglicht die telefonische Alarmierung bei einem Einbruch jedenfalls dann, wenn das Auto in der Nähe des Telefonanschlusses steht, ein ebenso rasches Einschreiten des Angerufenen wie bei einem Alarm durch eine Sirene oder die Autohupe. Die Steuereinrichtung kann im übrigen über einen Schalter auch mit einer Sirene oder der Autohupe verbunden sein, um bei weit von einem Telefonanschluss abgestelltem Fahrzeug zusätzlich akustischen Alarm auszulösen.

Um die aus dem Sprechhörer und dem Halterungsteil bestehende Telefoneinheit wahlweise in verschiedenen Fahrzeugen verwenden zu können, kann der Halterungsteil (ggf. zusammen mit weiteren, z. B. einen Anrufbeantworter enthaltenden Zwischenteilen) lösbar mit dem fest oder einstükkig mit dem Bodenteil verbundenen bzw. gebildeten Zwischenteil verbunden sein.

Um einem Diebstahl der Telefoneinheit vorzubeugen, sind gemäss Anspruch 12 der mit dem Bodenteil fest oder einstückig verbundene bzw. gebildete Zwischenteil sowie der Halterungsteil oder der Sprechhörer je mit einem Codeträger ausgrüstet und es ist eine Vergleichsschaltung für den Vergleich der beiden Codes vorgesehen, wobei das Telefon nur funktionsfähig ist, wenn der Code des Codeträgers im Halterungsteil oder Sprechhörer mit demjenigen im Zwischenteil übereinstimmt. Das hindert zwar den Diebstahl nicht, macht ihn aber nutzlos, so dass mit Autotelefonen vertraute Diebe vom Diebstahl eines solchen Telefontyps absehen.

Im folgenden werden anhand der Zeichnung Ausführungsbeispiele der Erfindung näher erläutert. Es zeigen:

Fig. 1 eine teilweise geschnittene Seitenansicht eines Autotelefons,

Fig. 2 das Autotelefon von Fig. 1 bei Verwendung ohne Zwischenteil, und

Fig. 3 ein Blockschema der elektrischen Bauelemente einer Einbruchmeldeinrichtung.

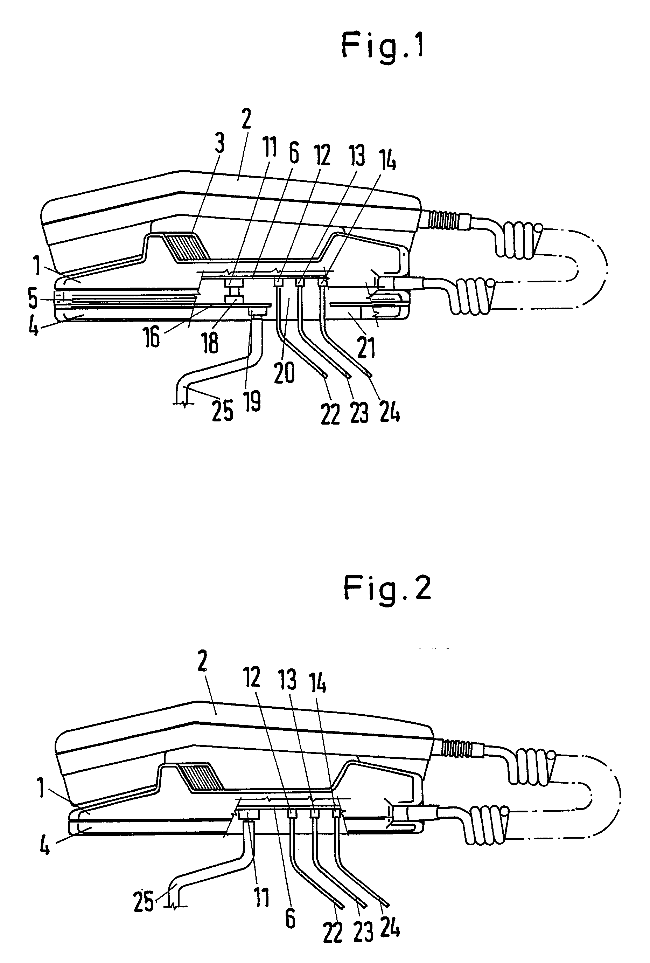

Das in Fig. 1 dargestellte Autotelefon hat einen Halterungsteil 1 für den Sprechhörer 2, der in bekannter Weise (EP-A 137 383 und EP-A 235 776) gegen Zug gesichert am Halterungsteil 1 gehalten und durch Betätigung eines Ausrückorgans 3 abgehoben werden kann. Zur Befestigung des Telefons auf einer Unterlage im Fahrzeug ist ein Bodenteil 4 vorgesehen. Zwischen dem Halterungs- und dem Bodenteil 1, 4 ist sandwichartig ein rahmenförmiger Zwischenteil 5 eingefügt, der denselben Umriss wie der Halterungs- und der Bodenteil hat und durch ihn hindurchgehende, den Halterungs- und den Bodenteil verbindende Schrauben im Verbund gehalten ist. Der Halterungsteil 1 trägt an seiner unteren, offenen Seite eine mit der Hör- und Sprechkapsel sowie den Wähl- und Bedientasten verbundene, elektrische Steuerbaugruppe aufweisende Leiterplatte 6, an deren Unterseite vier Steckverbinder (Kontaktstifte oder -buchsen) 11, 12, 13, 14 angeordnet sind.

An der Unterseite des rahmenförmigen Zwischenteils 5 ist eine Leiterplatte 16 befestigt, welche die elektrischen Bauteile und Speicherelemente eines digitalen Anrufbeantworters (einer digitalen Sprachaufzeichnungs- und -wiedergabevorrichtung) trägt. An der Ober- und Unterseite der Leiterplatte 16 ist je ein Steckverbinder 18, 19 (Kontaktbuchsen oder -stifte) angeordnet. Der obere Steckverbinder 18 ist so angeordnet, dass er beim Zusammenbau des Halterungs- und Zwischenteils 1, 5 zwangsläufig mit dem Steckverbinder 11 der Leiterplatte 6 zusammengesteckt wird. (Die Verbindung der Steckverbinder 11, 18 könnte auch über ein kleines Schleppkabel erfolgen). Im Bereich der Steckverbinder 12, 13, 14 hat die Leiterplatte 16 eine Aussparung für die Durchführung im Fahrzeug verlegter Anschlusskabel 22-24 zu den Steckverbindern 12-14.

Der Bodenteil 4 hat eine grössere, sich über den Steckverbinder 19 der Leiterplatte 16 sowie die Steckverbinder 12-14 der Leitplatte 6 erstreckende Oeffnung 21 zur Durchführung der Anschlusskabel 22-24 zu den Steckverbindern 12-14 und des Anschlusskabels 25 zum Steckverbinder 19. Die Oeffnung 21 ist so gross bemessen, dass man durch sie zum Zusammenstecken der Steckverbinder 12-14, 19 und der Steckverbinder der Kabel 22-25 mit den Fingern bequem hindurchgreifen kann.

Durch das Kabel 25 ist der digitale Anrufbeantworter mit einem an eine Fahrzeugantenne angeschlossenen Sende-Empfangsgerät verbunden. Die Kabel 22-23 verbinden die die Steuerbaugruppe aufweisende Leiterplatte 6 z. B. mit einer Freihörsprechanlage, einem Signalhorn, der Autobatterie, einem abgesetzten Bedienteil (wenn der Sprechhörer kein Bedienhörer ist) u. dgl.

Zusätzlich zum Zwischenteil 5 können ein oder mehrere weitere rahmenförmige Zwischenteile zwischen den Halterungs- und den Bodenteil 1, 4 eingefügt sein, die je eine zusätzliche elektrische Baugruppen aufweisende Leiterplatte tragen, z. B. elektrische Baugruppen zur Sprachcodierung- und -decodierung (Sprachverschlüsselung bzw. -verschleierung) und zur Störgeräuschunterdrückung. Die Leiterplatte jeder der zusätzlichen Zwischenteile ist entweder unmittelbar oder mittelbar über die Leiterplatte oder -platten des oder der dazwischenliegenden Zwischenteile mit der Leiterplatte 6 verbunden und hat einen oder mehrere für die Durchführung der Kabel 22-24 zu den Anschlüssen 12-14 der Leiterplatte 6 genügend gross bemessene Durchgänge.

Die Ansteuerung der elektrischen Baugruppen des bzw. der Zwischenteile erfolgt mittels einer (nicht dargestellten Steuervorrichtung) durch die zweckmässig am Sprechhörer angeordneten Bedientasten des Autotelefons, z. B. durch Mehrfachtastenausnutzung des Bedientastenfelds, wobei die sogenannte "Bedienerführung" des digitalen Anrufbeantworters vorzugsweise in dessen Software eingearbeitet ist. Der Anrufbeantworter hat einen Festspeicher, in dem ein fester Meldetext gespeichert ist, und einen Schreiblesespeicher für kurze Meldungen von z. B. 2 Minuten, die mittels des Mikrofons des Sprechhörers oder der an eines der Kabel 22-24 angeschlossenen Freihörsprechanlage eingegeben werden.

Die Wähl- und Bedientasten können statt am Sprechhörer auch an der Halterung oder einem an eines der Kabel 22-24 angeschlossenen Bedienteil vorgesehen sein. Der Sprechhörer kann auch ein Handfunktelefon ("Handheld"-Telefongerät) sein.

Anstelle der Steckverbindungen können auch Schraubklemmverbindungen vorgesehen sein.

Die Leiterplatte 16 des Zwischenteils 5 kann anstelle der oder zusätzlich zu den elektrischen Baugruppen des digitalen Anrufbeantworters auch die elektrischen Baugruppen einer sogenannten "Voice Scrolling"-Einrichtung" tragen, nämlich eine Steuervorrichtung und einen Telefonnummern- und Sprachspeicher, in dem Telefonnummern und diesen zugeordnete Teilnehmernamen nach Kurzwahlnummern geordnet speicherbar sind. Die "Voice Scrolling"-Einrichtung ist über die Steckverbinder 11, 18 mit der Leiterplatte 6 verbunden, die ihrerseits mit der Sprechkapsel und den Wähl- und Bedientasten sowie zusätzlich einem z. B. im Halterungsteil 1 eingebauten Lautsprecher verbunden ist. Die gewünschten Telefonnummern werden mit Hilfe der Tasten nach Kurzwahlnummern geordnet im Telefonnummernspeicher abgespeichert und zu jeder Kurzwahlnummer bzw. Telefonnummer wird ein den betreffenden Teilnehmer kennzeichnender Name in die Sprechkapsel gesprochen und im Sprachspeicher abgespeichert.

Für die Teilnehmerwahl wird entweder eine Kurzwahltaste betätigt und die Kurzwahlnummer mittels der Wähltastatur eingegeben oder mittels der Bedientasten ein "Voice Scrolling"-Befehl eingegeben. Im ersteren Fall steuert die Steuervorrichtung zunächst den Sprachspeicher und anschliessend den Telefonnummernspeicher an, so dass der der Kurzwahlnummer zugeordnete Teilnehmername durch den Lautsprecher ertönt und erst anschliessend der Wählvorgang beginnt. Hat der Fahrer eine falsche Kurzwahlnummer eingegeben, so kann er dies korrigieren, bevor die Steuervorrichtung die Telefonnummernwahl beendet hat. Im letzteren Fall steuert die Steuervorrichtung schrittweise nacheinander alle den Kurzwahlnummeren zugeordneten Teilnehmernamen im Sprachspeicher an. Sobald der gewünschte Teilnehmername aufgerufen wird, betätigt der Fahrer eine der Bedientasten, worauf die Steuervorrichtung die betreffende Telefonnummer wählt. Der schrittweise Abruf der Teilnehmernamen kann nach einer fest vorgegebenen Reihenfolge entsprechend den Kurzwahlnummeren, z. B. beginnend mit der kleinsten Kurzwahlnummer, erfolgen.

Der Abruf kann aber auch nach der Häufigkeit erfolgen, in der die Teilnehmer angerufen werden. Dazu kann der Speicher einen Häufigkeitsspeicher haben, in dem die Steuervorrichtung zu jeder Kurzwahlnummer die Summe der insgesamt geführten Telephongespräche speichert, d.h. bei jedem Anruf die der betr. Kurzwahlnummer zugeordnete Summe im Häufigkeitsspeicher um die Zahl 1 erhöht, wobei alle Summen im Häufigkeitsspeicher durch einen mittels der Bedientastatur eingebbaren Löschbefehl periodisch auf Null zurückgesetzt werden können. Bei einem "Voice Scrolling"-Befehl ruft die Steuervorrichtung dann die Teilnehmernamen in der Reihenfolge der im Häufigkeitsspeicher gespeicherten Summen ab, beginnend mit der grössten Summe, wobei die Teilnehmernamen, zu denen gleiche Summen im Häufigkeitsspeicher gespeichert sind, in der Reihenfolge der betr. Kurzwahlnummern abgerufen werden.

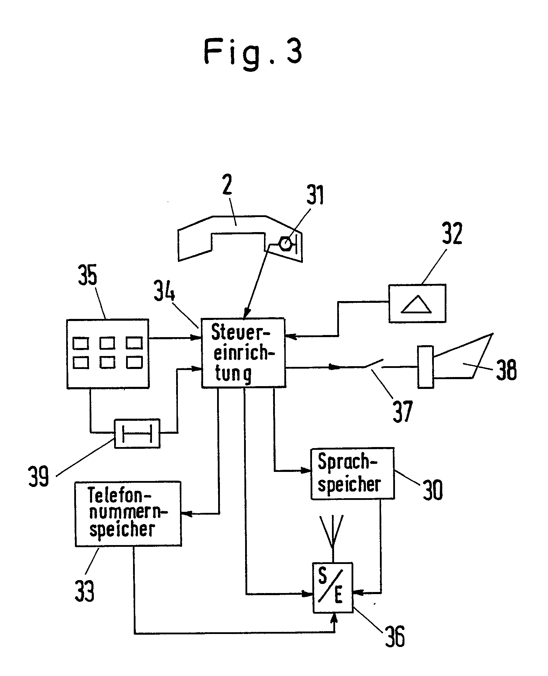

Die Leiterplatte 16 des Zwischenteils 5 kann zusätzlich zu den elektrischen Baugruppen des digitalen Anrufbeantworters die elektrischen Baugruppen der in Fig. 3 schematisch dargestellten Einbruchsmeldeinrichtung tragen.

Die Einbruchsmeldeeinrichtung hat einen Sprachspeicher 30 und eine mit einem Einbruchsignalgeber (Einbruchmelder) 32 sowie einem Telefonnummernspeicher 33 verbundene Steuereinrichtung 34. Die Eingabe in den Sprach- und den Telefonnummernspeicher 30 und 33 wird mittels der mit der Steuereinrichtung 34 verbundenen Wähl- und Bedientastatur 35 des Telefons gesteuert. Beim Verlassen des Fahrzeugs wird mittels der Tastatur 35 eine bei einem Einbruch in das Fahrzeug anzurufende Telefonnummer im Speicher 33 gespeichert. (Es können auch mehrere nacheinander anzurufende Telefonnummern gespeichert werden). Im Sprachspeicher 30 ist eine fest vorgegebene Einbruchsmeldung gespeichert. Anstelle dieser festen Meldung oder zusätzlich dazu kann mittels des Mikrofons 31 des Sprechhörers 2 eine z. B. den Standort des Fahrzeugs angebende Einbruchsmeldung im Speicher 30 gespeichert werden.

Der Einbruchsignalgeber 32 kann ein üblicher auf den Spannungsabfall des Autostromkreises und/oder das Oeffnen der Motorhaube, der Türen und des Kofferraumdeckels ansprechender, oder eine Ultraschallsonde aufweisender Einbruchmelder sein. Er bzw. die Steuereinrichtung 34 kann durch einen versteckt an der Aussenseite des Fahrzeugs angebrachten Schalter eingeschaltet, d.h. in Alarmbereitschaft versetzt werden.

Bei einem Einbruchsignal des Einbruchsignalgebers 32 wird mittels der Steuereinrichtung 34 selbsttätig die im Telefonnummernspeicher 33 gespeicherte Telefonnummer angerufen und die im Sprachaufzeichnungsspeicher 30 gespeicherte Einbruchsmeldung über das Sende-Empfangsgerät 36 des Autotelefons übermittelt.

Der Einbruchsignalgeber 32 kann statt durch den versteckt an der Aussenseite des Fahrzeugs angebrachten Schalter (den Diebe finden können und dessen notwendigerweise unauffällige Bedienung mühsam ist) auch durch eine beim Verlassen des Fahrzeugs mittels der Tastatur 35 ausgelöste Zeitverzögerungsschaltung 39 der Steuereinrichtung 34 eingeschaltet werden. Er gibt dann zwangsläufig auch beim Oeffnen des Autos durch den Berechtigten ein Einbruchsignal ab. Da der Wählvorgang aber einige Zeit dauert, kann er rechtzeitig vom Berechtigten unterbrochen werden, so dass der Anruf unterbleibt. Dazu hat die Steuereinrichtung 34 einen Unterbrecher, der bei unbeabsichtigter Auslösung des Einbruchsignals vom Berechtigten durch Eingabe einer Codenummer mittels der Tastatur 35 angesteuert wird und den Anruf bzw. Wählvorgang abbricht bzw. verhindert.

Um bei weit von einem Telefonanschluss abgestelltem Fahrzeug zusätzlich akustischen Alarm auszulösen, ist die Steuereinrichtung 34 über einen versteckt im Fahrzeuginnern angebrachten Schalter 37 mit einer Sirene 38 oder der Autohupe verbunden. Die wegen der Gefahr von Fehlalarmen problematische Auslösung des akustischen Alarms kann statt durch den Schalter 37 auch durch einen in der Steuereinrichtung 34 enthaltenen, mittels der Tastatur 35 anwählbaren Schaltungs- bzw. Programmteil unterbunden werden.

Die elektrischen Baugruppen der "Voice Scrolling"-Einrichtung" und der Einbruchmeldeeinrichtung können auch auf der Leiterplatte je eines weiteren rahmenförmigen Zwischenteils angeordnet sein, die wahlweise anstelle des den digitalen Anrufbeantworter tragenden Zwischenteils 5 oder zusammen mit diesem zwischen den Halterungs- und den Bodenteil 1, 4 eingefügt werden können. Der die "Voice Scrolling"-Einrichtung oder die Einbruchmeldeeinrichtung aufweisende Zwischenteil kann auch einstückig mit dem Halterungsteil 1 oder dem Bodenteil 4 gebildet sein.

Bei einer nicht dargestellten Ausführungsform ist der Halterungsteil 1 lösbar mit dem Zwischenteil 5 und dieser fest mit dem Bodenteil 4 verbunden. Dies ermöglicht es, das Telefon (den Halterungsteil 1 mit dem Sprechhörer 2 und allen wesentlichen akustischen und elektrischen Teilen des Telefons) in mehreren Fahrzeugen zu verwenden, indem in jedem Fahrzeug ein zusammen mit dem Bodenteil 4 fest verankerter Zwischenteil 5 angebracht wird. Dabei sind abweichend vom in Fig. 1 dargestellten Ausführungsbeispiel zweckmässig nicht nur für den Steckverbinder 11 sondern auch für die übrigen Steckverbinder 12-14 des Halterungsteils 1 Steckverbinder (entsprechend dem Steckverbinder 18) am Zwischenteil 5 vorgesehen, der demzufolge nicht nur mit dem Kabel 25 sondern auch mit den übrigen Kabeln 22-24 verbunden wird, so dass die Verbindung des Telefons mit allen Kabeln 22-25 durch Aufsetzen des Halterungsteils auf den Zwischenteil hergestellt wird.

Um einem Diebstahl des Telefons vorzubeugen, sind der Zwischenteil 5 und der Halterungsteil 1 (oder der Sprechhörer 2) mit je einem Codeträger ausgerüstet. Dabei ist im Codeträger des Halterungsteils 1 und in den Codeträgern sämtlicher demselben Halterungsteil 1 zugeordneten, in den verschiedenen Fahrzeugen montierten Zwischenteile 5 derselbe Code gespeichert und eine im Halterungsteil 1 (oder im Sprechhörer 2) vorgesehene Vergleichsschaltung vergleicht den Code des Codeträgers des Halterungsteils (oder Sprechhörers) mit demjenigen des Zwischenteils, wobei das Telefon nur funktionsfähig ist, wenn die beiden Codes übereinstimmen.

Bei einer nicht dargestellten anderen Ausführungsform ist anstelle des Codeträgers im Zwischenteil ein Codeträger im Sende- und Empfangsgerät angeordnet.

Der Zwischenteil und der Bodenteil können auch zu einem einstückigen Teil vereinigt sein.

Der Sprachspeicher 30, der Telefonnummernspeicher 33 und die Steuereinrichtung 34 der Einbruchmeldeeinrichtung können auch in der Halterung 1, im Sprechhörer 2, dem Sende-Empfangsgerät 36 oder einem separat im Fahrzeug montierten, mit dem Sende-Empfangsgerät 36 und vorzugsweise auch mit dem Halterungsteil bzw. Sprechhörer verbundenen Gerät angeordnet sein, wobei die Halterung unmittelbar im Fahrzeug befestigt und der Zwischenteil sowie der Bodenteil entfallen können.

Der Sprechhörer kann auch als Handfunktelefon (Handheld) ausgebildet sein.

Am Zwischenteil 5 kann ferner eine Schnittstelle RS 232 zum Anschluss eines Datenverarbeitungsgeräts, ein Anschluss (Steckverbinder) für einen Telefax und/oder ein Anschluss für die Kraftfahrzeugferndiagnose vorgesehen sein. Die Schnittstelle und die Anschlüsse könnten auch am Halterungs- oder Bodenteil 1, 4 angeordnet sein. Der Bodenteil 4 kann ein Stromversorgungsgerät oder Ladegerät enthalten und an seiner Unterseite einen Schnellwechselverschluss zum Anschluss z. B. an ein Sende-Empfangsgerät aufweisen.

## Ansprüche

1. Autotelefon, mit einem Halterungsteil (1) für den Sprechhörer (2) und einem mit dem Halterungsteil (1) verbundenen, zur Befestigung im Fahrzeug ausgebildeten Bodenteil (4), wobei der Halterungsteil (1) eine mit der Hör- und Sprechkapsel verbundene Leiterplatte (6) mit mehreren Anschlüssen (11-14) für im Fahrzeug verlegte Kabel (22-25) trägt, und der Bodenteil (4) eine Aussparung (21) zur Durchführung der Kabel (22-25) aufweist, dadurch gekennzeichnet, dass zwischen den Halterungs- (1) und dem Bodenteil (4) wenigstens ein Zwischenteil (5) sandwichartig eingefügt ist, der wenigstens eine mit der ersten Leiterplatte (6) bzw. einem (11) oder einem Teil deren Anschlüsse (11-14) verbundene, zusätzliche elektrische Baugruppen aufweisende zweite Leiterplatte (16) trägt und einen oder mehrere Durchgänge (20) für die Durchführung der Kabel (22-24) zu den bzw. den übrigen Anschlüssen (12-14) der ersten Leiterplatte (6) hat.

2. Autotelefon nach Anspruch 1, dadurch gekennzeichnet, dass die zweite Leiterplatte (16) an der der Aussparung (21) des Bodenteils (4) zugewandten Seite mindestens einen Anschluss (19) für eines oder einen Teil der Kabel (22-25), z. B. für das Kabel (25) eines Sende-Empfangsgeräts aufweist.

3. Autotelefon nach Anspruch 1 oder 2, dadurch gekennzeichnet, dass die zweite Leiterplatte (16) elektrische Baugruppen zur Sprachaufzeichnung und -wiedergabe und/oder zur Sprachcodierung- und -decodierung und/oder zur Störgeräuschunterdrückung trägt.

4. Autotelefon nach einem der Ansprüche 1 bis 3, dadurch gekennzeichnet, dass die zweite Leiterplatte (16) elektrische Baugruppen zur Speicherung von Telefonnummern und zur Sprachaufzeichnung und -wiedergabe von den Telefonnummern zugeordneten, den betr. Teilnehmer kennzeichnenden Namen sowie eine Steuervorrichtung für deren Abruf trägt, wobei die elektroakustischen Wandler für die Sprachaufzeichnung und -wiedergabe vorzugsweise durch die Mikrofonkapsel des Sprechhörers und einen z. B. im Halterungsteil angeordneten Lautsprecher gebildet sind.

5. Autotelefon nach Anspruch 4, dadurch gekennzeichnet, dass die zweite Leiterplatte (16) eine elektrische Baugruppe zur Speicherung der Summen der Anzahl Anrufe für jede gespeicherte Telefonnummer trägt, und mittels der Steuervorrichtung alle die Teilnehmer kennzeichnenden Namen in einer der Grösse der Summen entsprechenden Reihenfolge abrufbar sind, beginnend mit dem Namen, zu dessen Telefonnummer die grösste Summe gespeichert ist.

6. Autotelefon nach einem der Ansprüche 1 bis 4, dadurch gekennzeichnet, dass der Halterungs- (1), der Zwischen- (5) und der Bodenteil (4) gleichen Umriss haben.

7. Autotelefon nach einem der Ansprüche 1 bis 6, dadurch gekennzeichnet, dass der Zwischenteil rahmenförmig ist.

8. Autotelefon, vorzugsweise nach einem der Ansprüche 1 bis 7, mit einem Halterungsteil (1) für den Sprechhörer (2) und einem mit dem Halterungsteil (1) verbundenen, zur Befestigung im Fahrzeug ausgebildeten Bodenteil (4), dadurch gekennzeichnet, dass ein fest oder einstückig mit dem Bodenteil (4) verbundener bzw. gebildeter Zwischenteil (5) einen Sprachspeicher (30) für eine fest vorgegebene und/oder eine mittels des Mikrofons (31) des Sprechhörers (2) aufzeichenbare Einbruchsmeldung und eine mit einem Einbruchsignalgeber (32) sowie einem Telefonnummernspeicher (33) für mindestens eine bei einem Einbruch in das Fahrzeug anzurufende Telefonnummer verbundene Steuereinrichtung (34) aufweist, welche bei einem Einbruchsignal des Einbruchsignalgebers (32) selbsttätig die im Telefonnummernspeicher (33) gespeicherte Telefonnummer anruft und die im Sprachspeicher (30) gespeicherte Einbruchsmeldung durchgibt.

9. Autotelefon nach Anspruch 8, dadurch gekennzeichnet, dass der Einbruchsignalgeber (32) und/oder die Steuereinrichtung (34) durch eine beim Verlassen des Fahrzeugs mittels einer Taste, vorzugsweise der Wähl- und Bedientastatur (35) des Telefons auslösbare Zeitverzögerungsschaltung (39) in Alarmbereitschaft versetzbar ist.

10. Autotelefon nach Anspruch 8 oder 9, dadurch gekennzeichnet, dass die Steuereinrichtung (34) einen Unterbrecher zum Unterbrechen oder Verhindern des Anrufs aufweist, der durch Eingabe einer Codenummer mittels der Wähl- und Bedientastatur (35) des Telefons ansteuerbar ist.

11. Autotelefon nach einem der Ansprüche 8 bis 10, dadurch gekennzeichnet, dass die Steuereinrichtung (34) über einen Schalter (37) mit einer Sirene (38) oder der Autohupe verbunden ist, um bei geschlossenem Schalter (37) zusätzlich akustischen Alarm auszulösen.

12. Autotelefon, vorzugsweise nach einem der Ansprüche 1 bis 11, mit einem Halterungsteil (1) für den Sprechhörer (2) und einem mit dem Halterungsteil (1) verbundenen, zur Befestigung im Fahrzeug ausgebildeten Bodenteil (4), dadurch gekennzeichnet, dass der Halterungsteil (1) lösbar mit einem fest oder einstückig mit dem Bodenteil (4) verbundenen bzw. gebildeten Zwischenteil (5) verbunden ist, und dieser Zwischenteil (5) sowie der Halterungsteil (1) oder der Sprechhörer (2) je einen Codeträger aufweist und eine Vergleichsschaltung für den Vergleich der beiden Codes vorgesehen ist, wobei das Telefon nur funktionsfähig ist, wenn der Code des Codeträgers im Halterungsteil (1) oder Sprechhörer (2) mit demjenigen im Zwischenteil (5) übereinstimmt.

# Fig.1

# Fig.2

# Fig. 3